# EUROPÄISCHE PATENTSCHRIFT

(11) **EP 3 392 419 B1**
(45) Veröffentlichungstag und Bekanntmachung des Hinweises auf die Patenterteilung: **06.05.2020**
(21) Anmeldenummer: 17193126.4
(22) Anmeldetag: 26.09.2017
(51) Int. Cl.: E03D 11/14, F16B 21/04, F16B 37/04

(54) **BEFESTIGUNGSSYSTEM**
FASTENING SYSTEM
SYSTÈME DE FIXATION

(30) Priorität: 19.04.2017 EP 17167033
(43) Veröffentlichungstag der Anmeldung: 24.10.2018
(73) Patentinhaber: Geberit International AG, 8645 Jona (CH)
(72) Erfinder: ZWICKER, Maurus, 8733 Eschenbach (CH)
(74) Vertreter: Frischknecht, Harry Ralph

(56) Entgegenhaltungen:
- EP-A1- 1 538 350
- DE-A1-102014 111 600
- DE-U1-202012 104 847
- US-A- 4 850 778

## Beschreibung

### TECHNISCHES GEBIET

Die vorliegende Erfindung betrifft ein Befestigungssystem für einen Sanitärartikel gemäss Anspruch 1 sowie ein Verfahren zur Montage eines Sanitärartikels mit einem solchen Befestigungssystem gemäss Anspruch 16.

### STAND DER TECHNIK

Oftmals werden Sanitärartikel wie ein Urinal, eine Klosettschüssel, oder ein Waschtisch an der Wand befestigt, wobei der Sanitärartikel beispielsweise an Gewindestangen, welche in der Wand verankert sind, aufgesetzt oder daran festgeschraubt wird. Wünschenswert in diesem Zusammenhang ist natürlich, dass dabei eine stabile und zuverlässige Befestigung des Sanitärartikels erfolgt. Deshalb ist es bekannt, eine Befestigung des Sanitärartikels mittels entsprechenden Befestigungssystemen vorzunehmen.

Aus der DE 20 2012 104 847 U1 ist ein Befestigungsmittel für eine an der Wand zu befestigende sanitäre Ausstattung bekannt, welche über eine Mutter mit einem Spanner ein Kegelradgetriebe ausbildet. Bei einer Drehung des Spanners dreht sich die Mutter, wobei sich die Mutter und das gesamte Befestigungsmittel in Richtung der Wand bewegen und so die sanitäre Ausstattung an der Wand befestigen. Das Befestigungsmittel wird dabei über die Mutter auf einem an der Wand vormontierten Bolzen angebracht. Dazu muss der Installateur den Sanitärartikel zunächst vor dem Bolzen ausrichten und anschliessend in seiner Position halten, während er den Spanner betätigt. Dieser Vorgang ist für den Installateur umständlich. Zudem besteht die Gefahr, dass der Sanitärartikel verkippt und die Mutter nicht richtig auf den Bolzen aufgesetzt wird, so dass die Montage nicht zufriedenstellend ausgeführt werden kann.

Aus der noch unveröffentlichten EP 17 167 033 ist ein Befestigungssystem bekannt, welches eine werkzeuglose Befestigung einer den Sanitärartikel aufweisenden Lagerungseinheit an einer Gewindemutter, welche im Eingriff mit einer an der Wand vormontierten Gewindestange ist, ermöglicht. Die werkzeuglose Befestigung führt zwar zu einer vereinfachten Handhabung. Die Vorteile einer werkzeugbedingten Bewegungskontrolle bei der Befestigung entfallen allerdings dabei.

### DARSTELLUNG DER ERFINDUNG

Es ist daher eine Aufgabe der vorliegenden Erfindung, ein Befestigungssystem anzugeben, welches die Nachteile des Standes der Technik überwindet. Insbesondere soll ein Befestigungssystem angegeben werden, welches eine einfache und zuverlässige Montage eines Sanitärartikels erlaubt.

Diese Aufgabe wird durch ein Befestigungssystem für einen Sanitärartikel gemäss Anspruch 1 gelöst. Demgemäss wird ein Befestigungssystem für einen Sanitärartikel angegeben, welches eine Gewindemutter mit einem sich um eine Mittelachse erstreckenden Innengewinde für den Eingriff mit einer Gewindestange und eine Lagerungseinheit umfassend ein Antriebselement zur Betätigung der Gewindemutter und ein Aufnahmeelement zur Aufnahme des Sanitärartikels umfasst. Das Antriebselement wirkt auf die Gewindemutter und beaufschlagt die Gewindemutter mit einer Drehbewegung. Die Gewindemutter und das Antriebselement stehen über eine Verrieglungsmechanik miteinander in Verbindung, wobei die Verrieglungsmechanik derart ausgebildet ist, dass durch eine Montagebewegung der Lagerungseinheit entlang einer Befestigungsrichtung und durch eine an diese Montagebewegung anschliessende Drehbewegung des Antriebselements entlang einer ersten Drehrichtung um eine Drehachse herum ein mechanischer Eingriff zwischen Gewindemutter und Antriebselement bereitstellbar ist.

Der Installateur bewegt beziehungsweise schiebt die Lagerungseinheit mit dem Sanitärartikel zunächst entlang der Befestigungsrichtung über die sich auf der Gewindestange befindende Gewindemutter und beaufschlagt dann die Gewindemutter mit einer Drehbewegung, indem das Antriebselement gedreht wird. Dadurch wird der mechanische Eingriff zwischen der Gewindemutter und dem Antriebselement bereitgestellt. Dem Installateur wird somit ein Befestigungssystem an die Hand gegeben, das in der Handhabe wenig Änderung für ihn bedeutet, aber dennoch eine vorteilhafte Montage bewirkt. Für die Handhabung heisst dies, dass der Installateur nach wie vor den Sanitärartikel halten muss, bis der mechanische Eingriff vollbracht ist, anschliessend aber eine einfache Verstellmöglichkeit hat.

Weiter stellt die Verriegelungsmechanik eine Bewegungsführung während der Montagebewegung sowie eine Drehführung während der Drehbewegung dar, welche nebst einer einfachen Handhabe eine kontrollierte und somit zuverlässige Montage eines Sanitärartikels erlaubt.

Der besagte mechanische Eingriff kann die Gewindemutter und das Antriebselement um die Drehachse drehfest verriegeln und/oder der besagte mechanische Eingriff kann die Gewindemutter und das Antriebselement bezüglich einer Längsbewegung entgegen der Montagebewegung gegeneinander verriegeln.

Das heisst, über den mechanischen Eingriff wird eine Drehung des Antriebselement und der Gewindemutter gemeinsam ausgeführt, während eine relative Drehung zwischen dem Antriebselement und der Gewindemutter verhindert ist. Eine Drehbewegung des Antriebselements wird also auf die Gewindemutter übertragen. Durch die Blockierung bezüglich einer Längsbewegung gegen die Montagebewegung wird während der Verriegelung sichergestellt, dass sich die Verriegelung nicht gegen die Montagebewegung unabsichtlich löst und dass im montierten Zustand durch diesen Kontakt ein Anschlag für das Antriebselement bereitgestellt wird.

Solange kein mechanischer Eingriff zwischen der Gewindemutter und dem Antriebselement bereitgestellt ist, kann das Antriebselement bei der Drehbewegung entlang der ersten Drehrichtung im Wesentlichen ausschliesslich um die Drehachse drehbar sein, während die Gewindemutter um die Drehachse drehbar sowie entlang der Befestigungsrichtung bewegbar ist. In dieser Situation führt also eine Drehbewegung des Antriebselements dazu, dass das Antriebselement einzig die Drehbewegung ausführt, ohne sich dabei jedoch entlang der Befestigungsrichtung zu bewegen. Die Drehbewegung des Antriebselements wird dabei jedoch auf die Gewindemutter übertragen, so dass sich diese ebenfalls dreht und aufgrund des Gewindeeingriffs von ihrem Innengewinde mit dem Aussengewinde der Gewindestange eine Bewegung entlang der Befestigungsrichtung ausführt. Eine genügend lange Fortsetzung der Drehbewegung des Antriebselements führt dazu, dass der mechanische Eingriff mit der Gewindemutter hergestellt wird.

Wenn ein mechanischer Eingriff zwischen der Gewindemutter und dem Antriebselement bereitgestellt ist, können das Antriebselement und die Gewindemutter bei der Drehbewegung des Antriebselements entlang der ersten Drehrichtung gemeinsam um die Drehachse drehbar sowie gemeinsam entlang der Befestigungsrichtung bewegbar sein.

Wie erwähnt, führt der mechanische Eingriff der Verriegelungsmechanik zu einer drehfesten Verriegelung des Antriebselements mit der Gewindemutter, so dass die weitere Drehung des Antriebselements sowohl das Antriebselement als auch die Gewindemutter gemeinsam um die Drehachse dreht sowie gemeinsam entlang der Befestigungsrichtung auf der Gewindestange bewegt. Dabei wird auch die Lagerungseinheit entlang der Gewindestange bewegt und der Sanitärartikel wird gegen einen Anschlag, wie eine Wand, geklemmt.

Die Verriegelungsmechanik kann derart ausgebildet sein, dass der mechanische Eingriff durch eine Drehbewegung entlang einer der ersten Drehrichtung entgegengesetzten zweiten Drehrichtung lösbar ist.

Wenn der mechanische Eingriff zwischen der Gewindemutter und dem Antriebselement gelöst ist, kann das Antriebselement bei der Drehbewegung entlang der zweiten Drehrichtung im Wesentlichen ausschliesslich um die Drehachse drehbar sein, während die Gewindemutter um die Drehachse drehbar sowie entlang einer der Befestigungsrichtung entgegengesetzten Löserichtung bewegbar ist.

Die Gewindemutter kann eine zylindrische sich um die Mittelachse herum erstreckende Aussenwand und das Antriebselement kann einen Hohlraum mit einer zylindrischen Innenwand umfassen, wobei die Gewindemutter mit ihrer Aussenwand mindestens teilweise in den Hohlraum einragt und wobei die Verriegelungsmechanik im Bereich des Hohlraums beziehungsweise im Bereich der besagten Innenwand und/oder der Aussenwand angeordnet ist.

Die Verriegelungsmechanik kann mindestens eine Kurvenbahn und mindestens ein in die Kurvenbahn eingreifender Nocken umfassen. Der Nocken arbeitet dabei mit der Kurvenbahn im Sinne der obigen Beschreibung zusammen. Hierzu ragt der Nocken in die Kurvenbahn ein.

Die Kurvenbahn weist für die Zusammenarbeit mit dem Nocken diverse Seitenflächen auf, welche vorzugsweise alle miteinander verbunden sind. Insofern kann die Kurvenbahn als eine Ausnehmung ausgebildet sein, innerhalb welcher der Nocken bewegt wird. Vorzugsweise entspricht die Zahl der Nocken der Zahl der Kurvenbahnen.

Die Kurvenbahn kann sich in die zylindrische Aussenwand der Gewindemutter hinein erstrecken und der Nocken kann auf der Innenwand des Antriebselementes angeordnet sein. Das heisst, gemäss einer ersten Ausführungsform erstreckt sich die Kurvenbahn von der zylindrischen Aussenwand der Gewindemutter in die Seitenwand der Gewindemutter hinein. Betreffend den Nocken heisst dies, dass sich der Nocken dabei von der zylindrischen Innenwand des Antriebselementes weg erstreckt.

Alternativ kann der Nocken auf der zylindrischen Aussenwand der Gewindemutter angeordnet sein und die Kurvenbahn kann sich in die Innenwand des Antriebselementes hinein erstrecken. Das heisst, gemäss einer zweiten Ausführungsform kann sich der Nocken von einer zylindrischen Aussenwand der Gewindemutter weg erstrecken. Bezüglich der Kurvenbahn heisst dies, dass sich die Kurvenbahn dabei von einer zylindrischen Innenwand des Antriebselementes in das Antriebselement hinein erstreckt.

Die Kurvenbahn kann einen Einführabschnitt, einen ersten Anschlagsabschnitt und einen Lagerungsabschnitt aufweisen, wobei der Nocken beim Vorgang des Verbindens entlang der Befestigungsrichtung zuerst den Einführabschnitt passiert und dann bei der daran anschliessenden Drehbewegung des Antriebselements entlang der ersten Drehrichtung auf den ersten Anschlagsabschnitt auftrifft, wodurch die Gewindemutter derart verschwenkt wird, dass bei einer anhaltenden Drehbewegung des Antriebselements entlang der ersten Drehrichtung die Gewindemutter entlang der Befestigungsrichtung bewegt wird, so dass der Nocken in den Lagerungsabschnitt zu liegen kommt. Der mechanische Eingriff ist dann bereitgestellt, wenn der Nocken in der Lagerungseinheit liegt respektive aufgenommen ist.

Die Kurvenbahn kann weiter einen zweiten Anschlagsabschnitt aufweisen, wobei der Nocken bei der Drehbewegung des Antriebselements entlang der zweiten Drehrichtung auf den zweiten Anschlagsabschnitt auftrifft, wodurch die Gewindemutter derart verschwenkt wird, dass bei einer anhaltenden Drehbewegung des Antriebselements entlang der zweiten Drehrichtung die Gewindemutter entlang der Löserichtung bewegt wird. Der erste und der zweite Anschlagsabschnitt stellen somit jeweils einen Drehanschlag für den Nocken bereit, wenn das Antriebselement eine Drehung entlang der ersten beziehungsweise entlang der zweiten Drehrichtung ausführt.

Die Kurvenbahn kann weiter einen Endabschnitt aufweisen, welcher bezüglich der Mittelachse gegenüber vom Einführabschnitt angeordnet ist, wobei der Endabschnitt die Montagebewegung entlang der Befestigungsrichtung begrenzt.

Der Einführabschnitt, der erste und zweite Anschlagsabschnitt sowie der Endabschnitt stellen die oben erwähnten Seitenflächen der Kurvenbahn dar, welche die Ausnehmung für den Nocken begrenzen. Oder anders gesagt ist die Kurvenbahn annähernd U-förmig ausgebildet, wobei der erste Anschlagsabschnitt und der zweite Anschlagsabschnitt jeweils einem Schenkel der U-förmigen Kurvenbahn entsprechen.

Der Einführabschnitt kann seitlich durch zwei Führungsflächen begrenzt sein, wobei der Abstand zwischen den zwei Führungsflächen mit geringer werdendem Abstand zum Endabschnitt kleiner werden. In anderen Worten gesagt sind die beiden Führungsflächen entlang der Befestigungsrichtung winklig geneigt zueinander ausgebildet, so dass ein gutes Einschieben des Nockens in die Kurvenbahn erreicht werden kann.

Die Führungsflächen von zwei benachbarten Kurvenbahnen können derart angeordnet sein, dass die besagten Führungsflächen in einer Spitze gegenüber dem Lagerungsabschnitt zusammenlaufen. Mit der Spitze kann das Einführen des Nockens in die Kurvenbahn weiter vereinfacht werden.

Es können mindestens zwei Kurvenbahnen und mindestens zwei Nocken angeordnet sein, wobei die Paarungen Kurvenbahn und Nocken vorzugsweise jeweils in gleichmässigen Abständen um den Umfang der Gewindemutter verteilt angeordnet sind. Bei zwei Paarungen Nocken/Kurvenbahn liegen die Paarungen also vorzugsweise in einem Winkel von 180° um den Umfang versetzt.

Der Nocken kann frontseitig in seiner Form passend zum Lagerungsabschnitt ausgebildet sein. Beispielsweise kann der Lagerungsabschnitt halbkreisförmig ausgebildet sein, so dass ein kreisförmiger Nocken im Wesentlichen passgenau im Lagerungsabschnitt aufgenommen werden kann. Dies ermöglicht eine gute Übertragung der Drehbewegung des Antriebselements auf die Gewindemutter.

Die Lagerungseinheit kann weiter ein Gehäuse umfassen, welches Teil des Aufnahmeelementes ist, wobei das Antriebselement um die Drehachse drehbar im Gehäuse und bezüglich einer Längsbewegung entlang der Drehachse fest im Gehäuse gelagert ist, und/oder das Antriebselement kann durch ein Betätigungselement mit der Drehbewegung beaufschlagt werden, wobei zwischen Antriebselement und Betätigungselement vorzugsweise ein Zahngetriebe, insbesondere ein Kegelgetriebe, vorgesehen ist. Das Betätigungselement ist vorzugsweise im Gehäuse gelagert. Das Kegelgetriebe hat den Vorteil, dass die Drehachse für die Betätigung des Betätigungselementes winklig geneigt, insbesondere rechtwinklig zur besagten Mittelachse steht.

Das Innengewinde muss sich nicht über die gesamte Länge der Gewindemutter erstrecken. Das heisst, der zylindrische Hohlraum der Gewindemutter, durch welchen sich die Gewindestange hindurch erstreckt, weist zusätzlich zum Innengewinde einen Abschnitt auf, welcher ohne Gewinde ausgebildet ist. Vorzugsweise ist das Innengewinde im Wesentlichen im Bereich des besagten Lagerungsabschnittes angeordnet.

Ein Verfahren zur Montage eines Sanitärartikels mit einem Befestigungssystem wie oben beschrieben umfasst in einem ersten Schritt das Platzieren der Gewindemutter auf einer Gewindestange; in einem zweiten Schritt das über die Verrieglungsmechanik in Verbindung bringen der Gewindemutter mit der Lagerungseinheit mit dem mit der Lagerungseinheit in Verbindung stehenden Sanitärartikel durch die Montagebewegung entlang der Befestigungsrichtung und mit der an diese Montagebewegung anschliessenden Drehbewegung des Antriebselements entlang der ersten Drehrichtung um die Drehachse herum; und in einem dritten Schritt das Übertragen der Drehbewegung über das Antriebselement entlang der ersten Drehrichtung auf die Gewindemutter, wodurch die Lagerungseinheit entlang der Gewindestange bewegt wird und wodurch der Sanitärartikel gegen einen Anschlag, wie eine Wand, klemmbar ist.

Im zweiten Schritt kann der Nocken während der Montagebewegung den Einführabschnitt passieren und bei der daran anschliessenden Drehbewegung des Antriebselements entlang der ersten Drehrichtung zunächst auf den ersten Anschlagsabschnitt auftreffen und dann aufgrund der Bewegung der Gewindemutter entlang der Befestigungsrichtung in den Lagerungsabschnitt zu liegen kommen. Dadurch wird der mechanische Eingriff bereitgestellt.

### KURZE BESCHREIBUNG DER ZEICHNUNGEN

Bevorzugte Ausführungsformen der Erfindung werden im Folgenden anhand der Zeichnungen beschrieben, die lediglich zur Erläuterung dienen und nicht einschränkend auszulegen sind. In den Zeichnungen zeigen:
- Fig. 1: eine perspektivische Ansicht eines Befestigungssystem nach einer Ausführungsform der vorliegenden Erfindung;
- Fig. 2: eine Explosionsdarstellung des Befestigungssystems nach der Figur 1;
- Fig. 3: eine Draufsicht auf das Befestigungssystem nach Figur 1;
- Fig. 4: eine Schnittdarstellung entlang der Schnittlinie I-I der Figur 3;
- Fig. 5: eine Draufsicht auf das Befestigungssystem nach Figur 1 in verbundenem Zustand;
- Fig. 6: eine Schnittdarstellung entlang der Schnittlinie II-II der Figur 5;
- Fig. 7: eine weitere perspektivische Ansicht von Teilen des Befestigungssystems;
- Fig. 8: eine weitere perspektivische Ansicht von Teilen des Befestigungssystems;
- Fig. 9a-9c: die Bewegung von Teilen des Befestigungssystems während der Verriegelung;
- Fig. 10: verriegelte Position der in Figuren 9a-9c gezeigten Teile; und
- Fig. 11a-11c: die Bewegung von Teilen des Befestigungssystem während der Entriegelung.

### BESCHREIBUNG BEVORZUGTER AUSFÜHRUNGSFORMEN

In den Figuren wird eine Ausführungsform eines Befestigungssystems 1 für einen Sanitärartikel gezeigt. Das Befestigungssystem 1 dient der Befestigung eines Sanitärartikels an einem Montagesystem, von welchem eine Gewindestange 4 absteht. Die Gewindestange 4 ist dabei gebäudeseitig, beispielsweise an einem Montagerahmen, angeordnet, und steht in den Raum ab, in welchem der Sanitärartikel zu befestigen ist.

Der Sanitärartikel kann beispielsweise ein Urinal, eine Klosettschüssel, oder ein Waschtisch sein und ist in den Figuren nicht dargestellt.

Das Befestigungssystem 1 umfasst eine Gewindemutter 2 und eine Lagerungseinheit 5. Die Gewindemutter 2 umfasst ein sich um eine Mittelachse M erstreckendes Innengewinde 3 für den Eingriff mit der Gewindestange 4. Die Lagerungseinheit 5 umfasst ein Antriebselement 6 zur Betätigung der Gewindemutter 2 und ein Aufnahmeelement 7 zur Aufnahme des Sanitärartikels. Über das Antriebselement 6 kann eine Drehung auf die Gewindemutter 2 beaufschlagt werden, sodass die Gewindemutter 2 auf der feststehenden Gewindestange 4 entsprechend gedreht werden kann. Aufgrund der Zusammenwirkung zwischen Gewindemutter 2 und Gewindestange 4 bewegt sich die Gewindemutter 2 bei Drehung derselben in Richtung der Mittelachse M fort. Das Antriebselement 6 wirkt also auf die Gewindemutter 2 und beaufschlagt diese mit einer Drehbewegung.

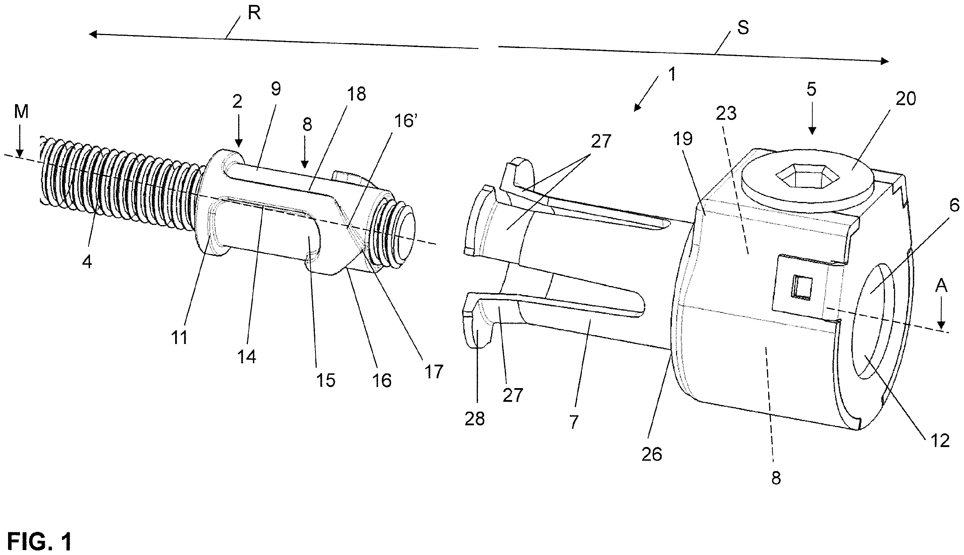

Das Antriebselement 6 wird in der Figur 1 in einem Gehäuse 19 gezeigt. Dabei kann das Antriebselement 6 in der gezeigten Ausführungsform über ein Betätigungselement 20 entsprechend angetrieben werden.

In der gezeigten Ausführungsform bilden das Aufnahmeelement 7 für den Sanitärartikel und das Gehäuse 19 eine einstückige Struktur. Das heisst, das Aufnahmeelement 7 ist Teil des Gehäuses 19.

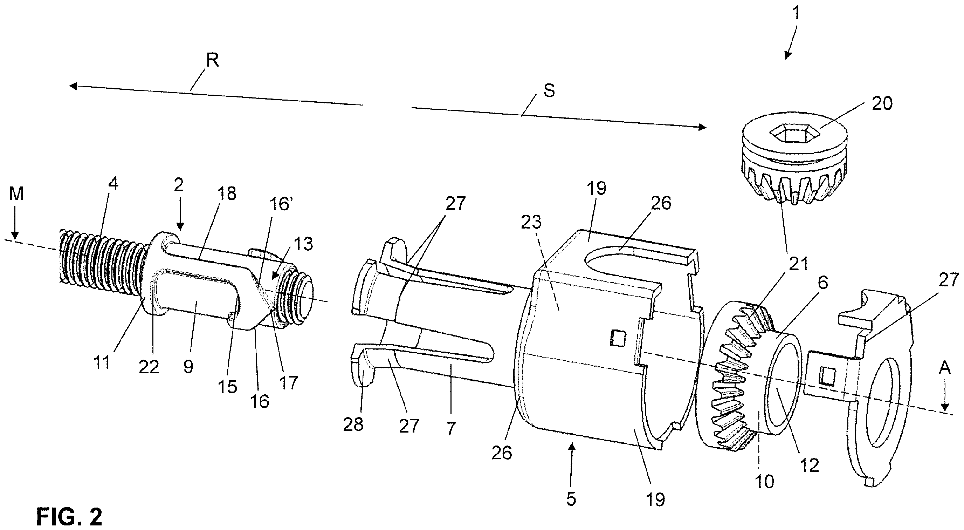

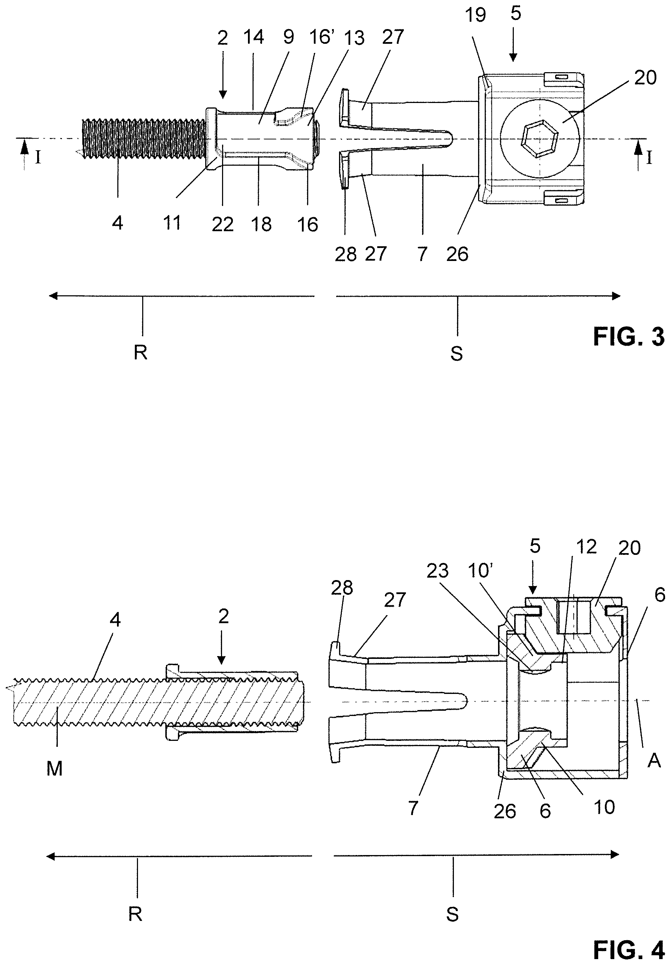

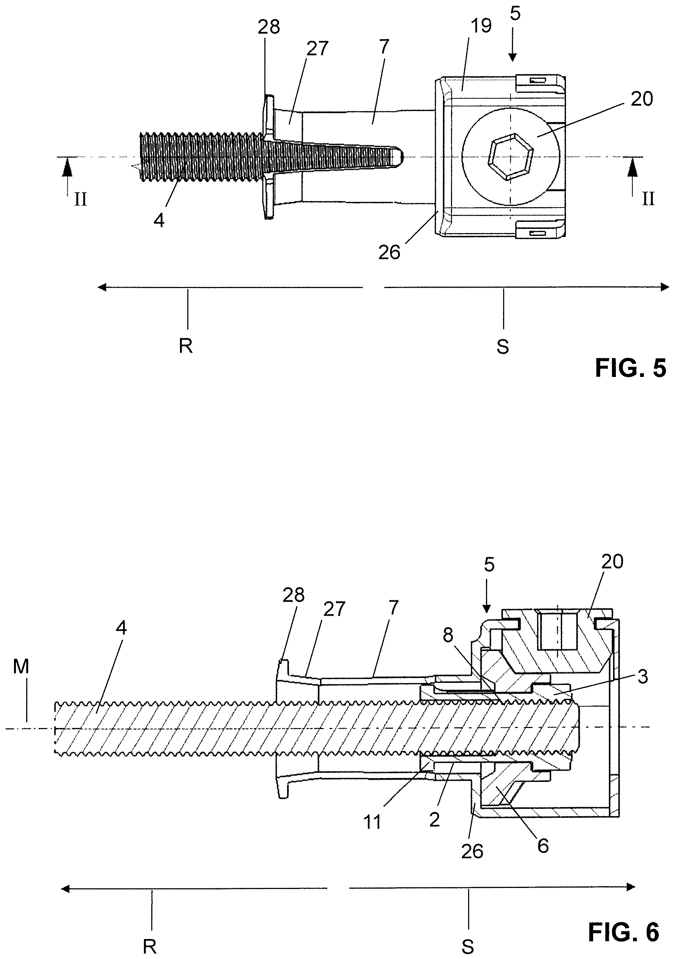

In der Figur 2 wird eine Explosionsdarstellung des Befestigungssystems 1 gemäss der Figur 1 gezeigt. In der Figur 3 wird eine Draufsicht des Befestigungssystems mit unverbundener Lagerungseinheit 5 und Gewindemutter 2 gezeigt und die Figur 4 zeigt eine Schnittdarstellung entlang der Schnittlinie I-I von der Figur 3. Eine Draufsicht auf das Befestigungssystem, bei welchem die Gewindemutter 2 mit der Lagerungseinheit 5 verbunden ist, ist in Figur 5 gezeigt. Die Figur 6 zeigt eine entsprechende Schnittdarstellung entlang der Schnittlinie II-II von der Figur 5. Anhand der Figuren 2 bis 5 wird nun die Verbindung zwischen der Gewindemutter 2 und dem Antriebselement 6 genauer erläutert.

Die Gewindemutter 2 und das Antriebselement 6 stehen über eine Verriegelungsmechanik 8 miteinander in Verbindung. Die Verriegelungsmechanik 8 ermöglicht einen mechanischen Eingriff zwischen der Gewindemutter 2 und dem Antriebselement 6. Teile der Verriegelungsmechanik 8 sind dabei an der Gewindemutter 2 sowie am Antriebselement 6 angeordnet. Die Verriegelungsmechanik 8 ist dabei derart ausgebildet, dass durch eine Montagebewegung der Lagerungseinheit 5 entlang einer Befestigungsrichtung R und durch eine an diese Montagebewegung anschliessende Drehbewegung des Antriebselements 6 entlang einer ersten Drehrichtung d1 um eine Drehachse A herum ein mechanischer Eingriff respektive eine mechanische Verriegelung zwischen der Gewindemutter 2 und dem Antriebselement 6 bereitgestellt wird.

Eine zur Befestigungsrichtung R entgegengesetzte Richtung wird als Löserichtung S bezeichnet. Die Befestigungsrichtung R, die Löserichtung S sowie die Drehachse A verlaufen dabei koaxial zur Mittelachse M. Unter der Montagebewegung kann eine lineare Bewegung wie eine Schiebbewegung der Lagerungseinheit 5 entlang der Befestigungsrichtung R verstanden werden. Diese Montagebewegung wird vorzugsweise allerdings nur solange ausgeübt, bis eine Drehung des Antriebselements 6 um die Drehachse A ermöglicht ist.

Die Verriegelungsmechanik 8 ist vorzugsweise derart ausgebildet, dass bei der Montagebewegung des Antriebselementes 6 gemeinsam mit der Lagerungseinheit 5 die Gewindemutter 2 um die Drehachse A leicht verschwenkt wird, während die Lagerungseinheit 5 im Wesentlichen ausschliesslich entlang der Befestigungsrichtung R bewegt wird. Die leichte Verschwenkung hat den Vorteil, dass die Verriegelungsmechanik 8 entsprechend aktiviert werden kann. Die Montagebewegung der Lagerungseinheit 5 wird bezüglich der auf der Gewindestange 4 im Wesentlichen feststehenden Gewindemutter 2 ausgeführt.

Solange noch kein mechanischer Eingriff zwischen der Gewindemutter 2 und dem Antriebselement 6 bereitgestellt ist, ist das Antriebselement 6 bei der Drehbewegung entlang der ersten Drehrichtung d1 im Wesentlichen ausschliesslich um die Drehachse A drehbar, während die Gewindemutter 2 während dieser Drehung sowohl um die Drehachse A drehbar als auch entlang der Befestigungsrichtung R bewegbar ist. Das heisst, während die Gewindemutter 2 aufgrund des Gewindeeingriffs von seinem Innengewinde 3 mit dem Aussengewinde der Gewindestange 4 bei der Drehung des Antriebselements 6 entlang der Befestigungsrichtung R bewegt wird, führt das Antriebselement 6 einzig die Drehbewegung aus, ohne sich dabei jedoch entlang der Befestigungsrichtung R zu bewegen. Es sei hier angemerkt, dass die Montagebewegung bzw. eine der Montagebewegung entgegengesetzte Bewegung prinzipiell auch noch ausgeübt werden kann, wenn eine Drehung des Antriebselements 6 um die Drehachse A bereits ermöglicht ist. Dann allerdings wird die erfindungsgemässe Verriegelungsmechanik 8 nicht aktiviert und es findet kein Fortbewegen der Gewindemutter 2 auf der Gewindestange 4 statt.

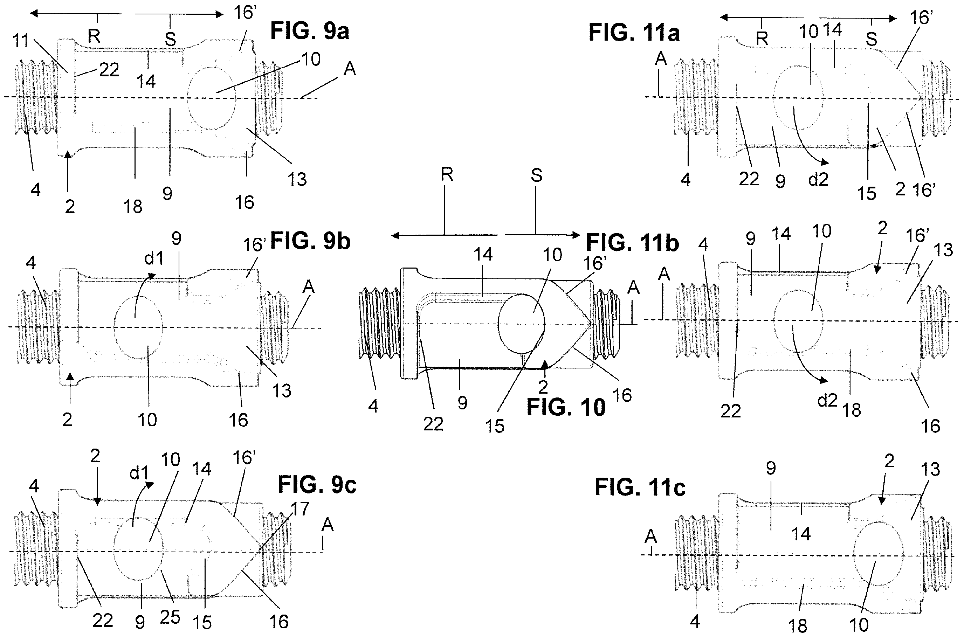

Wie nachfolgend im Zusammenhang mit den Figuren 9 bis 11 eingehend erläutert wird, führt eine genügend lange Fortsetzung der Drehbewegung des Antriebselements 6 dazu, dass der mechanische Eingriff mit der Gewindemutter 2 hergestellt wird. Der besagte mechanische Eingriff der Verriegelungsmechanik 8 ist dabei derart ausgebildet, dass die Verriegelung drehfest um die Drehachse A ist. Das heisst, dass eine Drehung vom Antriebselement 6 auf die Gewindemutter 2 übertragbar ist. Ist also der mechanische Eingriff hergestellt, so führt die weitere Drehung des Antriebselements 6 dazu, dass sowohl das Antriebselement 6 als auch die Gewindemutter 2 gemeinsam um die Drehachse A gedreht sowie gemeinsam entlang der Befestigungsrichtung R auf der Gewindestange 4 bewegt werden. Dabei wird auch die Lagerungseinheit 5 entlang der Gewindestange 4 bewegt und der Sanitärartikel wird gegen einen Anschlag, wie eine Wand, geklemmt.

Der mechanische Eingriff zwischen dem Antriebselement 6 und der Gewindemutter 2 wird durch eine Drehbewegung entlang einer der ersten Drehrichtung d1 entgegengesetzten zweiten Drehrichtung d2 gelöst. Wurde der besagte mechanische Eingriff gelöst, so wird das Antriebselement 6 im Falle der fortgesetzten Drehbewegung entlang der zweiten Drehrichtung d2 im Wesentlichen ausschliesslich um die Drehachse A gedreht. Die Gewindemutter 2 hingegen führt eine Drehung um die Drehachse A und aufgrund des Gewindeeingriffs mit der Gewindestange 4 eine Bewegung entlang der Löserichtung S aus.

Wie erwähnt, ist der mechanische Eingriff der Verriegelungsmechanik 8 dabei derart ausgebildet, dass die Verriegelung drehfest um die Drehachse A ist. In der gezeigten Ausführungsform wird dies durch einen Lagerungsabschnitt 15, in welchen ein Nocken 10 einragt, bereitgestellt. Der Lagerungsabschnitt 15 ist dabei Teil der Gewindemutter 2 und der Nocken 10 ist Teil des Antriebselementes 6. Die Konfiguration kann auch umgekehrt sein. Des Weiteren ist der mechanische Eingriff derart ausgebildet, dass zwischen dem Antriebselement 6 und der Gewindemutter 2 eine Bewegung entlang der Löserichtung S verunmöglicht ist. In der gezeigten Ausführungsform wird dieser wiederrum durch die Kombination Nocken 10 und Lagerungsabschnitt 15 gelöst. Der Lagerungsabschnitt 15 steht dabei einen entsprechenden Anschlag für den Nocken 10 bereit.

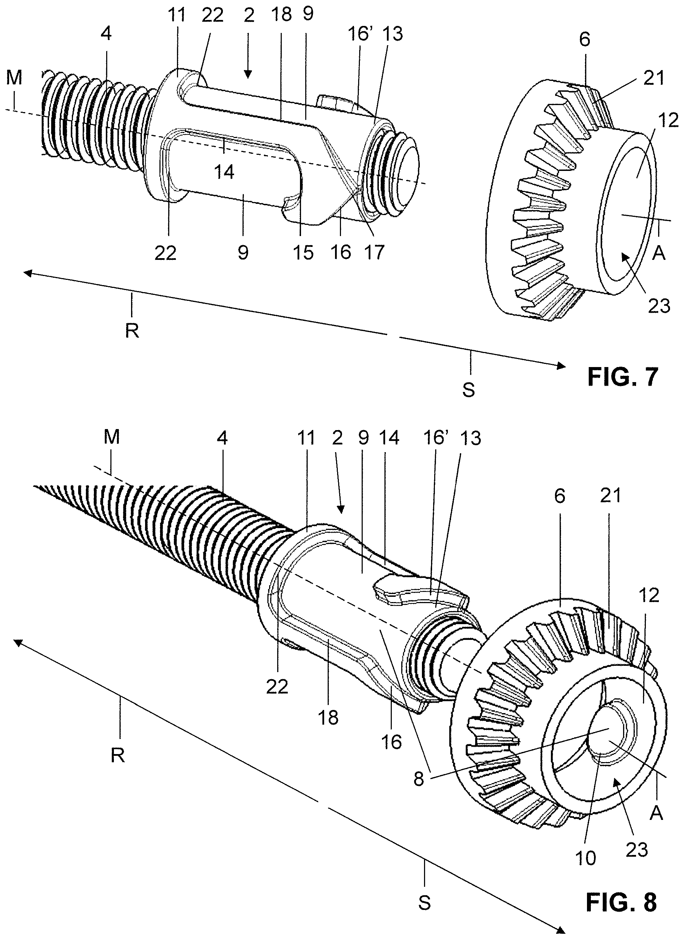

Von den Figuren 2 bis 8 kann gut erkannt werden, dass die Gewindemutter 2 eine zylindrische sich um die Mittelachse M ersteckende Aussenwand 11 aufweist. Innenseitig ist das Innengewinde 3 angeordnet. Das Antriebselement 6 weist einen Hohlraum 23 auf, welcher eine zylindrische Innenwand 12 umfasst. In der montierten Stellung ragt die Gewindemutter 2 mit ihrer Aussenwand 11 mindestens teilweise in den Hohlraum 23 des Antriebselementes 6 ein. Die besagte Verriegelungsmechanik 8 ist im Bereich des Hohlraums 23, also im Bereich der besagten Innenwand 12 beziehungsweise der Aussenwand 11, angeordnet.

Die konkrete Ausgestaltung und Funktionsweise der Verriegelungsmechanik wird in der Folge erläutert.

Die Verriegelungsmechanik 8 umfasst in der gezeigten Ausführungsform eine Kurvenbahn 9 und mindestens ein in die Kurvenbahn 9 eingreifenden Nocken 10. Die Kurvenbahn 9 erstreckt sich in der gezeigten Ausführungsform in die zylindrische Aussenwand 11 der Gewindemutter 2 hinein. Der Nocken 10 ist auf der Innenwand 12 des Antriebselementes 6 angeordnet und erstreckt sich von dieser nach aussen hin weg. In der gezeigten Ausführungsform sind zwei Nocken 10 bezüglich der Mittelachse M gegenüberliegend zueinander angeordnet. Gleichermassen sind zwei Kurvenbahnen 9 bezüglich der Mittelachse M gegenüberliegend zueinander angeordnet. Die Paarung Kurvenbahn 9 / Nocken 10 liegt auf einer 180°-Teilung.

Die Kurvenbahn 9 weist einen Einführabschnitt 13, einen ersten Anschlagsabschnitt 14, einen zweiten Anschlagsabschnitt 18 und den oben beschriebenen Lagerungsabschnitt 15 auf. Anhand der Figuren 9a bis 11c wird nun die Verbindung zwischen der Gewindemutter 2 und dem Antriebselement 6 über die Verriegelungsmechanik 8 mit der Kurvenbahn 9 und dem Nocken 10 genauer erläutert. Der Nocken 10 bewegt sich beim Vorgang des Verbindens bei der Montagebewegung entlang der Befestigungsrichtung R zuerst durch den Einführabschnitt 13, so wie dies in der Figur 9a gezeigt ist. Der Nocken 10 wird durch den Einführabschnitt 13 in die Kurvenbahn 9 eingeführt und bewegt sich fortan in der Kurvenbahn 9. Die Kurvenbahn 9 kann auch als Ausnehmung in der Aussenwand 11 der Gewindemutter 2 verstanden werden, welche durch zwei Seitenwände 14, 18 und eine Endwand 22 begrenzt wird. Die Ausnehmung 9 ist dabei annähernd U-förmig ausgebildet, wobei die zwei Seitenwände 14, 18 die beiden U-Schenkel bilden. Wie nun eingehender erläutert wird, bilden diese Seitenwände 14, 18 jeweils einen Anschlag für den Nocken 10 bei seiner Drehbewegung um die Drehachse A herum und werden im Folgenden deshalb auch als der erste beziehungsweise der zweite Anschlagsabschnitt 14, 18 bezeichnet. Da die Endwand 22 die Bewegung des Nockens 10 entlang der Befestigungsrichtung R begrenzt, wird diese auch Endabschnitt 22 genannt. Sobald sich der Nocken 10 in der Kurvenbahn 9 befindet, kann das Antriebselement 6 eine Drehbewegung ausführen, welche auf die Gewindemutter 2 übertragen wird.

Wird nun das Antriebselement 6 entlang der ersten Drehrichtung dl, welche hier einer Drehung im Uhrzeigersinn entspricht, gedreht, so trifft es zunächst auf den ersten Anschlagsabschnitt 14 auf, wie dies in Figur 9b dargestellt ist. Bei der weiteren Ausführung der Drehbewegung entlang der ersten Drehrichtung d1 wird die Gewindemutter 2 ebenfalls um die Drehachse A gedreht. So stösst der Nocken 10 gegen den ersten Anschlagsabschnitt 14, wodurch die Drehbewegung des Antriebselements 6 auf die Gewindemutter 2 übertragen wird. Wie bereits erläutert führt die Drehbewegung der Gewindemutter 2 dazu, dass diese aufgrund ihres Gewindeeingriffs mit der Gewindestange 4 auf der Gewindestange 4 entlang der Befestigungsrichtung R fortbewegt wird. Während dem führt der Nocken 10 eine "Drehung an Ort" aus, das heisst er dreht sich um die Drehachse A, ohne sich jedoch entlang der Mittelachse M respektive Bewegungsrichtung R zu bewegen. Wird diese Drehbewegung genügend lange ausgeführt, so wird der Nocken 10 schlussendlich im Lagerungsabschnitt 15 der Gewindemutter 2 aufgenommen. Diese Situation ist in Figur 10 gezeigt.

Befindet sich der Nocken 10 im Lagerungsabschnitt 15, so wird eine relative Drehbewegung zwischen der Gewindemutter 2 und dem Antriebselement 6 um die Drehachse A sowie eine Längsbewegung zwischen Gewindemutter 2 und Antriebselement 6 entlang der Löserichtung S verhindert.

In der in Figur 10 gezeigten Lage ist die Verriegelungsmechanik 8 entsprechend im Eingriff und der Installateur kann über das Betätigungselement 20 die Drehbewegung auf das Antriebselement 6 beaufschlagen, welches dann über die Verbindung zwischen Nocken 10 und Lagerungsabschnitt 15 die Drehbewegung auf die Gewindemutter 2 überträgt, so dass sich diese dann um die Drehachse A dreht und entlang der Befestigungsrichtung R auf der Gewindestange 4 fortbewegt.

Der Einführabschnitt 13 ist seitlich durch zwei Führungsflächen 16, 16' begrenzt. Der Abstand zwischen diesen beiden Führungsflächen 16 nimmt mit geringer werdendem Abstand zum Endabschnitt 22 ab. Das heisst die beiden Führungsflächen 16, 16' sind winklig geneigt zueinander und stellen für den Nocken 10 eine vorteilhafte Konfiguration bereit, so dass der Nocken 10 möglichst einfach in die Kurvenbahn 9 eingeschoben werden kann.

In der gezeigten Ausführungsform sind die Führungsflächen 16, 16' von den beiden benachbarten Kurvenbahnen 9 derart angeordnet, dass die Führungsflächen 16, 16' in eine Spitze 17 gegenüber des Lagerungsabschnittes 15 zusammenlaufen. Die Bereitstellung dieser Spitze 17 hat den Vorteil, dass sich bei der Vorpositionierung des Nockens 10 respektive bei der anfänglichen Montagebewegung beim Beginn des Einführabschnittes 13 die Gewindemutter 2 einfach drehen kann und der Nocken 10 möglichst gut in die Kurvenbahn 9 findet.

In der gezeigten Ausführungsform weist der Nocken 10 eine im Wesentlichen ovale Form mit einer gerundeten Frontfläche 25 auf. Die Fläche des Lagerungsabschnittes 15, in welche die Frontfläche 25 zu liegen kommt ist dabei ebenfalls gerundet ausgebildet.

Anhand der Figuren 11a bis 11c wird nun die Aufhebung der Verriegelungsverbindung 8 genauer gezeigt. Bei der Aufhebung des Befestigungssystem 1 löst der Installateur über das Betätigungselement 20 eine der ersten Drehrichtung d1 entgegengesetzte zweite Drehrichtung d2 des Antriebselements 6 aus, so dass in einem ersten Schritt der mechanische Eingriff zwischen der Gewindemutter 2 und dem Antriebselement 6 gelöst wird. Wie in Figur 11a ersichtlich ist, bewegt sich die Gewindemutter 2 bei einer Drehung entlang der zweiten Drehrichtung d2, wiederum aufgrund des Gewindeeingriffs mit der Gewindestange 4, zunächst etwas in Richtung der Löserichtung S, wobei der Nocken 10 aus dem Lagerungsabschnitt 15 heraus gelangt. Durch weiteres Drehen entlang der zweiten Drehrichtung d2 schlägt der Nocken 10 dann gegen den zweiten Anschlagsabschnitt 18 und überträgt so die Drehbewegung auf die Gewindemutter 2. Dies geht aus Figur 11b hervor. Analog zum Befestigen des Lagerungseinheit 5 entlang der Befestigungsrichtung R wird nun beim Lösen der Nocken 10 bzw. das Antriebselement 6 bei der Drehung entlang der zweiten Drehrichtung d2 im Wesentlichen ausschliesslich um die Drehachse A gedreht, während dem die Gewindemutter 2 sowohl um die Drehachse A gedreht als auch entlang der Löserichtung S bewegt wird. Wie aus Figur 11c hervorgeht, kann der Nocken 10 respektive das Antriebselement 6 durch eine der Montagebewegung entgegengesetzte Längsbewegung, wie beispielsweise durch ein Ziehen entlang der Löserichtung S, über den Einführabschnitt 13 aus der Kurvenbahn 9 der Gewindemutter 2 entfernt werden. Da das Antriebselement 6 ein Bestandteil der Lagerungseinheit 5 ist, welche über das Aufnahmeelement 7 den Sanitärartikel aufgenommen hat, wird bei der Entfernung des Antriebselements 6 aus der Gewindemutter 2 heraus somit auch der Sanitärartikel demontiert.

Anhand der Figur 2 werden nun weitere Details im Zusammenhang mit der Lagerungseinheit 5 erläutert. Wie bereits erwähnt umfasst die Lagerungseinheit 5 in der gezeigten Ausführungsform ein Gehäuse 19. Das Gehäuse 19 bildet dabei einen Teil des Aufnahmeelementes 7. Das Antriebselement 6 ist um die Drehachse A drehbar im Gehäuse 19 gelagert und bezüglich einer Längsbewegung entlang dieser Drehachse A ist das Antriebselement 6 fest im Gehäuse gelagert. Hierzu umfasst das Gehäuse 19 entsprechende Anschlagsflächen 26. Weiter ist im Gehäuse das Betätigungselement 20 gelagert, mit welchem das Antriebselement 6 mit einer Drehbewegung beaufschlagbar ist. Für die Übertragung der Drehbewegung ist zwischen dem Antriebselement 6 und dem Betätigungselement 20 ein Zahngetriebe 21 vorgesehen. Die Zähne sind dabei integraler Bestandteil der jeweiligen Elemente. Das Zahngetriebe 21 hat in der gezeigten Ausführungsform die Form eines Kegelgetriebes bzw. eines Winkelgetriebes. Das heisst die Drehachse des Betätigungselementes 20 steht winklig geneigt insbesondere rechtwinklig zur Drehachse A des Antriebselementes 6. Die Drehachse A des Antriebselementes 6 ist in der montierten Stellung kollinear zur Mittelachse M der Gewindestange 4 beziehungsweise des Innengewindes 3.

Das Aufnahmeelement 7, welches hier integraler Bestandteil des Gehäuses 19 ist, umfasst mehrere Lagerlaschen 27, welche sich vom Gehäuse 19 wegerstrecken. Der Sanitärartikel wird dabei an diesen Lagerlaschen 27 gelagert. Des Weiteren umfasst das Gehäuse eine äussere Anschlagsfläche 28, welche ebenfalls mit dem Sanitärartikel in Kontakt kommt und diesen in Gebrauchszustand gegen eine Wand klemmt.

### BEZUGSZEICHENLISTE

- 1: Befestigungssystem
- 2: Gewindemutter
- 3: Innengewinde
- 4: Gewindestange
- 5: Lagerungseinheit
- 6: Antriebselement
- 7: Aufnahmeelement
- 8: Verrieglungsmechanik
- 9: Kurvenbahn
- 10, 10': Nocken
- 11: Aussenwand
- 12: Innenwand
- 13: Einführabschnitt
- 14: erster Anschlagsabschnitt
- 15: Lagerungsabschnitt
- 16, 16': Führungsflächen
- 17: Spitze
- 18: zweiter Anschlagsabschnitt
- 19: Gehäuse
- 20: Betätigungselement
- 21: Zahngetriebe
- 22: Endabschnitt
- 23: Hohlraum
- 24: Leitfläche
- 25: gerundete Frontfläche
- 26: Anschlagsfläche
- 27: Lagerlaschen
- 28: äussere Anschlagsfläche
- A: Drehachse
- d1: erste Drehrichtung
- d2: zweite Drehrichtung
- R: Befestigungsrichtung
- S: Löserichtung

## Patentansprüche

1. Befestigungssystem (1) für einen Sanitärartikel umfassend
eine Gewindestange (4),
eine Gewindemutter (2) mit einem sich um eine Mittelachse (M) erstreckenden Innengewinde (3) für den Eingriff mit der Gewindestange (4) und
eine Lagerungseinheit (5) umfassend ein Antriebselement (6) zur Betätigung der Gewindemutter (2) und ein Aufnahmeelement (7) zur Aufnahme des Sanitärartikels,
wobei das Antriebselement (6) auf die Gewindemutter (2) wirkt und die Gewindemutter (2) mit einer Drehbewegung beaufschlagt,
**dadurch gekennzeichnet,**
**dass** die Gewindemutter (2) und das Antriebselement (6) über eine Verrieglungsmechanik (8) miteinander in Verbindung stehen, wobei die Verrieglungsmechanik (8) derart ausgebildet ist, dass durch eine Montagebewegung der Lagerungseinheit (5) entlang einer Befestigungsrichtung (R) und durch eine an diese Montagebewegung anschliessende Drehbewegung des Antriebselements (6) entlang einer ersten Drehrichtung (d1) um eine Drehachse (A) herum ein mechanischer Eingriff zwischen Gewindemutter (2) und Antriebselement (6) bereitstellbar ist.

2. Befestigungssystem (1) nach Anspruch 1, **dadurch gekennzeichnet, dass** der besagte mechanische Eingriff die Gewindemutter (2) und das Antriebselement (6) um die Drehachse (A) drehfest verriegelt und/oder dass der besagte mechanische Eingriff die Gewindemutter (2) und das Antriebselement (6) bezüglich einer Längsbewegung entgegen der Montagebewegung gegeneinander verriegelt.

3. Befestigungssystem (1) nach einem der vorhergehenden Ansprüche, **dadurch gekennzeichnet,**
**dass**, solange kein mechanischer Eingriff zwischen der Gewindemutter (2) und dem Antriebselement (6) bereitgestellt ist, das Antriebselement (6) bei der Drehbewegung entlang der ersten Drehrichtung (d1) im Wesentlichen ausschliesslich um die Drehachse (A) drehbar ist, während die Gewindemutter (2) um die Drehachse (A) drehbar sowie entlang der Befestigungsrichtung (R) bewegbar ist;
und/oder
**dass**, wenn ein mechanischer Eingriff zwischen der Gewindemutter (2) und dem Antriebselement (6) bereitgestellt ist, das Antriebselement (6) und die Gewindemutter (2) bei der Drehbewegung des Antriebselements (6) entlang der ersten Drehrichtung (d1) gemeinsam um die Drehachse (A) drehbar sowie gemeinsam entlang der Befestigungsrichtung (R) bewegbar sind.

4. Befestigungssystem (1) nach einem der vorhergehenden Ansprüche, **dadurch gekennzeichnet, dass** die Verriegelungsmechanik (8) derart ausgebildet ist, dass der mechanische Eingriff durch eine Drehbewegung entlang einer der ersten Drehrichtung (d1) entgegengesetzten zweiten Drehrichtung (d2) lösbar ist.

5. Befestigungssystem (1) nach Anspruch 4, **dadurch gekennzeichnet, dass**, wenn der mechanische Eingriff zwischen der Gewindemutter (2) und dem Antriebselement (6) gelöst ist, das Antriebselement (6) bei der Drehbewegung entlang der zweiten Drehrichtung (d2) im Wesentlichen ausschliesslich um die Drehachse (A) drehbar ist, während die Gewindemutter (2) um die Drehachse (A) drehbar sowie entlang einer der Befestigungsrichtung (R) entgegengesetzten Löserichtung (S) bewegbar ist.

6. Befestigungssystem (1) nach einem der vorhergehenden Ansprüche, **dadurch gekennzeichnet, dass** die Gewindemutter (2) eine zylindrische sich um die Mittelachse (M) herum erstreckende Aussenwand (11) und das Antriebselement (6) einen Hohlraum (23) mit einer zylindrischen Innenwand (12) umfasst, wobei die Gewindemutter (2) mit ihrer Aussenwand (11) mindestens teilweise in den Hohlraum (23) einragt und wobei die Verriegelungsmechanik (8) im Bereich des Hohlraums (23) bzw. im Bereich der besagten Innenwand (12) und/oder der Aussenwand (11) angeordnet ist.

7. Befestigungssystem (1) nach einem der vorhergehenden Ansprüche, **dadurch gekennzeichnet, dass** die Verriegelungsmechanik (8) mindestens eine Kurvenbahn (9) und mindestens ein in die Kurvenbahn (9) eingreifender Nocken (10) umfasst.

8. Befestigungssystem (1) nach Anspruch 7, **dadurch gekennzeichnet, dass** die Kurvenbahn (9) sich in die zylindrische Aussenwand (11) der Gewindemutter (2) hinein erstreckt und der Nocken (10) auf der Innenwand (12) des Antriebselementes (6) angeordnet ist; oder dass der Nocken (10) auf der zylindrischen Aussenwand (11) der Gewindemutter (2) angeordnet ist und die Kurvenbahn (9) sich in die Innenwand (12) des Antriebselementes (6) hinein erstreckt.

9. Befestigungssystem (1) nach einem der vorhergehenden Ansprüche 7 bis 8, **dadurch gekennzeichnet, dass** die Kurvenbahn (9) einen Einführabschnitt (13), einen ersten Anschlagsabschnitt (14) und einen Lagerungsabschnitt (15) aufweist, wobei der Nocken (10) beim Vorgang des Verbindens entlang der Befestigungsrichtung (R) zuerst den Einführabschnitt (13) passiert und dann bei der daran anschliessenden Drehbewegung des Antriebselements (6) entlang der ersten Drehrichtung (d1) auf den ersten Anschlagsabschnitt (14) auftrifft, wodurch die Gewindemutter (2) derart verschwenkt wird, dass bei einer anhaltenden Drehbewegung des Antriebselements (6) entlang der ersten Drehrichtung (d1) die Gewindemutter (2) entlang der Befestigungsrichtung (R) bewegt wird, so dass der Nocken (10) in den Lagerungsabschnitt (15) zu liegen kommt.

10. Befestigungssystem (1) nach Anspruch 9, wobei die Kurvenbahn (9) weiter einen zweiten Anschlagsabschnitt (18) aufweist, wobei der Nocken (10) bei der Drehbewegung des Antriebselements (6) entlang der zweiten Drehrichtung (d2) auf den zweiten Anschlagsabschnitt (18) auftrifft, wodurch die Gewindemutter (2) derart verschwenkt wird, dass bei einer anhaltenden Drehbewegung des Antriebselements (6) entlang der zweiten Drehrichtung (d2) die Gewindemutter (2) entlang der Löserichtung (S) bewegt wird.

11. Befestigungssystem (1) nach einem der vorhergehenden Ansprüche 9 bis 10, **dadurch gekennzeichnet, dass** die Kurvenbahn (9) weiter einen Endabschnitt (22) aufweist, welcher bezüglich der Mittelachse (M) gegenüber vom Einführabschnitt (13) angeordnet ist, wobei der Endabschnitt (22) die Montagebewegung entlang der Befestigungsrichtung (R) begrenzt.

12. Befestigungssystem (1) nach Anspruch 11, **dadurch gekennzeichnet, dass** der Einführabschnitt (13) seitlich durch zwei Führungsflächen (16, 16') begrenzt ist, wobei der Abstand zwischen den zwei Führungsflächen (16, 16') mit geringer werdendem Abstand zum Endabschnitt (22) kleiner wird.

13. Befestigungssystem (1) nach Anspruch 12, **dadurch gekennzeichnet, dass** die Führungsflächen (16, 16') von zwei benachbarten Kurvenbahnen (9) derart angeordnet sind, dass die besagten Führungsflächen (16, 16') in einer Spitze (17) gegenüber dem Lagerungsabschnitt (15) zusammenlaufen.

14. Befestigungssystem (1) nach einem der Ansprüche 7 bis 13, **dadurch gekennzeichnet, dass** mindestens zwei Kurvenbahnen (9) und mindestens zwei Nocken (10) angeordnet sind, wobei die Paarungen Kurvenbahn (9) und Nocken (10) vorzugsweise jeweils in gleichmässigen Abständen um den Umfang der Gewindemutter (2) verteilt angeordnet sind.

15. Befestigungssystem (1) nach einem der vorhergehenden Ansprüche, **dadurch gekennzeichnet,**
**dass** die Lagerungseinheit (5) weiter ein Gehäuse (19) umfasst, welches Teil des Aufnahmeelementes (7) ist, wobei das Antriebselement (6) um die Drehachse (A) drehbar im Gehäuse (19) und bezüglich einer Längsbewegung entlang der Drehachse (A) fest im Gehäuse (19) gelagert ist, und/oder
**dass** das Antriebselement (6) durch ein Betätigungselement (20) mit der Drehbewegung beaufschlagt wird, wobei zwischen Antriebselement (6) und Betätigungselement (20) vorzugsweise ein Zahngetriebe (21), insbesondere ein Kegelgetriebe, vorgesehen ist; und/oder
**dass** das Innengewinde (3) sich nicht über die gesamte Länge der Gewindemutter (2) erstreckt.

16. Verfahren zur Montage eines Sanitärartikels mit einem Befestigungssystem (1) nach einem der vorhergehenden Ansprüche, **dadurch gekennzeichnet,**
**dass** in einem ersten Schritt die Gewindemutter (2) auf einer Gewindestange (4) platziert wird,
**dass** in einem zweiten Schritt die Lagerungseinheit (5) mit dem mit der Lagerungseinheit (5) in Verbindung stehenden Sanitärartikel durch die Montagebewegung entlang der Befestigungsrichtung (R) und mit der an diese Montagebewegung anschliessenden Drehbewegung des Antriebselements (6) entlang der ersten Drehrichtung (d1) um die Drehachse (A) herum über die Verrieglungsmechanik (8) mit der Gewindemutter (2) in Verbindung gebracht wird,
und **dass** in einem dritten Schritt über das Antriebselement (6) die Drehbewegung entlang der ersten Drehrichtung (d1) auf die Gewindemutter (2) übertragen wird, wodurch die Lagerungseinheit (5) entlang der Gewindestange (4) bewegt wird und wodurch der Sanitärartikel gegen einen Anschlag, wie eine Wand, klemmbar ist.

17. Verfahren nach Anspruch 16, **dadurch gekennzeichnet, dass** im zweiten Schritt während der Montagebewegung der Nocken (10) den Einführabschnitt (13) passiert und bei der daran anschliessenden Drehbewegung des Antriebselements (6) entlang der ersten Drehrichtung (d1) zunächst auf den ersten Anschlagsabschnitt (14) auftrifft und dann aufgrund der Bewegung der Gewindemutter (2) entlang der Befestigungsrichtung (R) in den Lagerungsabschnitt (15) zu liegen kommt.

## Claims

1. A fastening system (1) for a sanitary appliance including
a threaded rod (4)
a threaded nut (2) with an internal thread (3) extending about a center axis (M), for engagement with the threaded rod (4), and
a bearing unit (5) including a drive element (6) for actuating the threaded nut (2) and a receiving element (7) for receiving the sanitary appliance,
wherein the drive element (6) acts on the threaded nut (2) and applies a rotational movement to the threaded nut (2),
**characterized in that**
the threaded nut (2) and the drive element (6) are connected to one another via a locking mechanism (8), wherein the locking mechanism (8) is realized in such a manner that a mechanical engagement between the threaded nut (2) and the drive element (6) is providable as a result of a mounting movement of the bearing unit (5) along a fastening direction (R) and as a result of a rotational movement of the drive element (6), following said mounting movement, along a first direction of rotation (d1) around a rotational axis (A) .

2. The fastening system (1) as claimed in claim 1, **characterized in that** said mechanical engagement locks the threaded nut (2) and the drive element (6) so as to be non-rotatable about the rotational axis (A) and/or **in that** said mechanical engagement locks the threaded nut (2) and the drive element (6) in relation to one another with reference to a longitudinal movement opposite to the mounting movement.

3. The fastening system (1) as claimed in one of the preceding claims, **characterized in that**, as long as no mechanical engagement is provided between the threaded nut (2) and the drive element (6), the drive element (6) is rotatable substantially exclusively about the rotational axis (A) during the rotational movement along the first direction of rotation (d1) whilst the threaded nut (2) is rotatable about the rotational axis (A) and movable along the fastening direction (R);
and/or
**in that** when a mechanical engagement is provided between the threaded nut (2) and the drive element (6), the drive element (6) and the threaded nut (2) are rotatable together about the rotational axis (A) and are movable together along the fastening direction (R) in the case of the rotatable movement of the drive element (6) along the first direction of rotation (d1).

4. The fastening system (1) as claimed in one of the preceding claims, **characterized in that** the locking mechanism (8) is realized in such a manner that the mechanical engagement is releasable by a rotational movement along a second direction of rotation (d2) which is opposite to the first direction of rotation (d1).

5. The fastening system (1) as claimed in claim 4, **characterized in that**, when the mechanical engagement between the threaded nut (2) and the drive element (6) is released, the drive element (6) is rotatable substantially exclusively about the rotational axis (A) during the rotational movement along the second direction of rotation (d2), whilst the threaded nut (2) is rotatable about the rotational axis (A) and movable along a release direction (S) which is opposite to the fastening direction (R).

6. The fastening system (1) as claimed in one of the preceding claims, **characterized in that** the threaded nut (2) includes a cylindrical outer wall (11) which extends around the center axis (M) and the drive element (6) includes a cavity (23) with a cylindrical inner wall (12), wherein the threaded nut (2) projects by way of its outer wall (11) at least in part into the cavity (23) and wherein the locking mechanism (8) is arranged in the region of the cavity (23) or in the region of said inner wall (12) and/or of the outer wall (11), respectively.

7. The fastening system (1) as claimed in one of the preceding claims, **characterized in that** the locking mechanism (8) includes at least one curved track (9) and at least one cam (10) which engages in the curved track (9).

8. The fastening system (1) as claimed in claim 7, **characterized in that** the curved track (9) extends into the cylindrical outer wall (11) of the threaded nut (2) and the cam (10) is arranged on the inner wall (12) of the drive element (6); or **in that** the cam (10) is arranged on the cylindrical outer wall (11) of the threaded nut (2) and the curved track (9) extends into the inner wall (12) of the drive element (6).

9. The fastening system (1) as claimed in either of preceding claims 7 to 8, **characterized in that** the curved track (9) comprises an insertion portion (13), a first stop portion (14) and a bearing portion (15), wherein during the connecting operation along the fastening direction (R), the cam (10) first passes the insertion portion (13) and then, during the subsequent rotational movement of the drive element (6) along the first direction of rotation (d1), contacts the first stop portion (14), as a result of which the threaded nut (2) is pivoted in such a manner that when the drive element (6) is persistently rotated along the first direction of rotation (d1), the threaded nut (2) is moved along the fastening direction (R) so that the cam (10) comes to rest in the bearing portion (15).

10. The fastening system (1) as claimed in claim 9, wherein the curved track (9) further comprises a second stop portion (18), wherein the cam (10), during the rotational movement of the drive element (6) along the second direction of rotation (d2), contacts the second stop portion (18), as a result of which the threaded nut (2) is pivoted in such a manner that, when the drive element (6) is rotated persistently along the second direction of rotation (d2), the threaded nut (2) is moved along the release direction (S).

11. The fastening system (1) as claimed in either of preceding claims 9 to 10, **characterized in that** the curved track (9) further comprises an end portion (22) which is arranged opposite the insertion portion (13) with reference to the center axis (M), wherein the end portion (22) delimits the mounting movement along the fastening direction (R).

12. The fastening system (1) as claimed in claim 11, **characterized in that** the insertion portion (13) is laterally delimited by two guide surfaces (16, 16'), wherein the distance between the two guide surfaces (16, 16') decreases as the distance to the end portion (22) decreases.

13. The fastening system (1) as claimed in claim 12, **characterized in that** the guide surfaces (16, 16') of two adjacent curved tracks (9) are arranged in such a manner that said guide surfaces (16, 16') merge in a point (17) in relation to the bearing portion (15).

14. The fastening system (1) as claimed in one of claims 7 to 13, **characterized in that** at least two curved tracks (9) and at least two cams (10) are arranged, wherein the pairings of curved track (9) and cam (10) are preferably arranged in each case distributed at regular distances about the circumference of the threaded nut (2).

15. The fastening system (1) as claimed in one of the preceding claims, **characterized in that** the bearing arrangement (5) further includes a housing (19) which is part of the receiving element (7), wherein the drive element (6) is mounted in the housing (19) so as to be rotatable about the rotational axis (A) and so as to be fixed in the housing (19) with reference to a longitudinal movement along the rotational axis (A), and/or
**in that** the drive element (6) is charged with the rotational movement by an actuating element (20), wherein a toothed gear (21), in particular a bevel gear, is preferably provided between the drive element (6) and the actuating element (20); and/or
**in that** the internal thread (3) does not extend over the entire length of the threaded nut (2).

16. A method for mounting a sanitary appliance with a fastening system (1) as claimed in one of the preceding claims, **characterized**
**in that** in a first step the threaded nut (2) is placed on a threaded rod (4),
**in that** in a second step, the bearing unit (5) with the sanitary appliance, which is connected to the bearing unit (5), is moved via the locking mechanism (8) into connection with the threaded nut (2) as a result of the mounting movement along the fastening direction (R) and by way of the rotational movement of the drive element (6), which follows said mounting movement, along the first direction of rotation (d1) around the rotational axis (A),
and **in that** in a third step, the rotational movement along the first direction of rotation (d1) is transmitted via the drive element (6) to the threaded nut (2), as a result of which the bearing unit (5) is moved along the threaded rod (4) and as a result of which the sanitary appliance is clampable against a stop, such as a wall.

17. The method as claimed in claim 16, **characterized in that** in the second step, the cam (10) passes the insertion portion (13) during the mounting movement and, in the case of the rotational movement of the drive element (6), following said mounting movement, along the first direction of rotation (d1), first contacts the first stop portion (14) and then comes to rest in the bearing portion (15) on account of the movement of the threaded nut (2) along the fastening direction (R).

## Revendications

1. Système de fixation (1) destiné à un article sanitaire, ledit dispositif comprenant
une tige filetée (4),
un écrou fileté (2) pourvu d'un filetage intérieur (3), s'étendant autour d'un axe central (M), et destiné à s'engager avec la tige filetée (4) et
une unité de logement (5) comprenant un élément d'entraînement (6) destiné à actionner l'écrou fileté (2) et un élément de réception (7) destiné à recevoir l'article sanitaire,
l'élément d'entraînement (6) agissant sur l'écrou fileté (2) et conférant à l'écrou fileté (2) un mouvement de rotation,
**caractérisé en ce que**
l'écrou fileté (2) et l'élément d'entraînement (6) sont reliés l'un à l'autre par un mécanisme de verrouillage (8), le mécanisme de verrouillage (8) étant conçu de manière à ce qu'un mouvement de montage de l'unité de logement (5) dans un sens de fixation (R) et un mouvement de rotation de l'élément d'entraînement (6), faisant suite au mouvement de rotation, dans un premier sens de rotation (d1) sur un axe de rotation (A) produisent un engagement mécanique entre l'écrou fileté (2) et l'élément d'entraînement (6).

2. Système de fixation (1) selon la revendication 1, **caractérisé en ce que** ledit engagement mécanique verrouille l'écrou fileté (2) et l'élément d'entraînement (6) solidairement en rotation sur l'axe de rotation (A) et/ou **en ce que** ledit engagement mécanique verrouille l'écrou fileté (2) et l'élément d'entraînement (6) par rapport à un mouvement longitudinal opposé au mouvement de montage.

3. Système de fixation (1) selon l'une des revendications précédentes, **caractérisé en ce que**
en l'absence d'engagement mécanique entre l'écrou fileté (2) et l'élément d'entraînement (6), l'élément d'entraînement (6) ne peut tourner sensiblement que sur l'axe de rotation (A) pendant le mouvement de rotation dans le premier sens de rotation (d1), tandis que l'écrou fileté (2) peut tourner sur l'axe de rotation (A) et se déplacer dans le sens de fixation (R) ;
et/ou
lorsqu'un engagement mécanique est produit entre l'écrou fileté (2) et l'élément d'entraînement (6), l'élément d'entraînement (6) et l'écrou fileté (2) peuvent tourner conjointement dans le premier sens de rotation (d1) sur l'axe de rotation (A) pendant le mouvement de rotation de l'élément d'entraînement (6) et se déplacer conjointement dans le sens de fixation (R).

4. Système de fixation (1) selon l'une des revendications précédentes, **caractérisé en ce que** le mécanisme de verrouillage (8) est conçu de manière à ce que l'engagement mécanique puisse être libéré par un mouvement de rotation dans un deuxième sens de rotation (d2) opposé au premier sens de rotation (d1).

5. Système de fixation (1) selon la revendication 4, **caractérisé en ce que**, lorsque l'engagement mécanique entre l'écrou fileté (2) et l'élément d'entraînement (6) est libéré, l'élément d'entraînement (6) ne peut tourner sensiblement que sur l'axe de rotation (A) pendant le mouvement de rotation dans le deuxième sens de rotation (d2), tandis que l'écrou fileté (2) peut tourner sur l'axe de rotation (A) et se déplacer dans un sens de libération (S) opposé au sens de fixation (R).

6. Système de fixation (1) selon l'une des revendications précédentes, **caractérisé en ce que** l'écrou fileté (2) comporte une paroi extérieure cylindrique (11) s'étendant autour de l'axe central (M) et l'élément d'entraînement (6) comporte une cavité (23) pourvue d'une paroi intérieure cylindrique (12), l'écrou fileté (2) pourvu de sa paroi extérieure (11) faisant saillie au moins partiellement dans la cavité (23) et le mécanisme de verrouillage (8) étant disposé au niveau de la cavité (23) ou de ladite paroi intérieure (12) et/ou de la paroi extérieure (11).

7. Système de fixation (1) selon l'une des revendications précédentes, **caractérisé en ce que** le mécanisme de verrouillage (8) comprend au moins une piste de came (9) et au moins une came (10) s'engageant dans la piste de came (9).

8. Système de fixation (1) selon la revendication 7, **caractérisé en ce que** la piste de came (9) s'étend jusque dans la paroi extérieure cylindrique (11) de l'écrou fileté (2) et la came (10) est disposée sur la paroi intérieure (12) de l'élément d'entraînement (6) ; ou **en ce que** la came (10) est disposée sur la paroi extérieure cylindrique (11) de l'écrou fileté (2) et la piste de came (9) s'étend jusque dans la paroi intérieure (12) de l'élément d'entraînement (6).

9. Système de fixation (1) selon l'une des revendications précédentes 7 et 8, **caractérisé en ce que** la piste de came (9) comporte une portion d'insertion (13), une première portion de butée (14) et une portion de logement (15),
la came (10) passant tout d'abord dans la portion d'insertion (13) pendant le processus de liaison dans le sens de fixation (R) puis venant impacter la première portion de butée (14) pendant le mouvement de rotation suivant de l'élément d'entraînement (6) dans le premier sens de rotation (d1), ce qui fait pivoter l'écrou fileté (2) de sorte que, lorsque l'élément d'entraînement (6) s'arrête de tourner dans le premier sens de rotation (dl), l'écrou fileté (2) se déplace dans le sens de fixation (R) de sorte que la came (10) vient se placer dans la portion de logement (15).

10. Système de fixation (1) selon la revendication 9, dans lequel la piste de came (9) comporte en outre une deuxième portion de butée (18), la came (10) venant impacter la deuxième portion de butée (18) pendant le mouvement de rotation de l'élément d'entraînement (6) dans le deuxième sens de rotation (d2), ce qui fait pivoter l'écrou fileté (2) de telle sorte que, lorsque l'élément d'entraînement (6) s'arrête de tourner, l'écrou fileté (2) est déplacé dans le sens de libération (S) dans le deuxième sens de rotation (d2).

11. Système de fixation (1) selon l'une des revendications précédentes 9 et 10, **caractérisé en ce que** la piste de came (9) comporte en outre une portion d'extrémité (22) qui est disposée à l'opposé de la portion d'insertion (13) par rapport à l'axe central (M), la portion d'extrémité (22) limitant le mouvement de montage dans le sens de fixation (R).

12. Système de fixation (1) selon la revendication 11, **caractérisé en ce que** la portion d'insertion (13) est délimitée latéralement par deux surfaces de guidage (16, 16'), la distance entre les deux surfaces de guidage (16, 16') devenant plus petite à mesure que la distance de la portion d'extrémité (22) diminue.

13. Système de fixation (1) selon la revendication 12, **caractérisé en ce que** les surfaces de guidage (16, 16') de deux pistes de came (9) adjacentes sont disposées de telle sorte que lesdites surfaces de guidage (16, 16') convergent en une pointe (17) par rapport à la portion de logement (15).

14. Système de fixation (1) selon l'une des revendications 7 à 13, **caractérisé en ce qu'**au moins deux pistes de came (9) et au moins deux cames (10) sont prévues, les paires de piste de came (9) et de came (10) étant de préférence chacune réparties à distances régulières sur la périphérie de l'écrou fileté (2).

15. Système de fixation (1) selon l'une des revendications précédentes, **caractérisé en ce que**
l'unité de logement (5) comprend en outre un boîtier (19) qui fait partie de l'élément de réception (7), l'élément d'entraînement (6) étant logé dans le boîtier (19) de manière à pouvoir tourner sur l'axe de rotation (A) et de manière fixe dans le boîtier (19) par rapport à un mouvement longitudinal le long de l'axe de rotation (A), et/ou
l'élément d'entraînement (6) est soumis au mouvement de rotation par un élément d'actionnement (20), une transmission à denture (21), en particulier une transmission conique, étant de préférence prévue entre l'élément d'entraînement (6) et l'élément d'actionnement (20) ; et/ou
le filetage intérieur (3) ne s'étend pas sur toute la longueur de l'écrou fileté (2).

16. Procédé de montage d'un article sanitaire à l'aide d'un système de fixation (1) selon l'une des revendications précédentes, **caractérisé en ce que**
dans une premier étape l'écrou fileté (2) est placé sur une tige filetée (4),
dans une deuxième étape l'unité de logement (5) pourvu de l'article sanitaire relié à l'unité de logement (5) est reliée à l'écrou fileté (2) par le mécanisme de verrouillage (8) par le mouvement de montage dans le sens de fixation (R) et le mouvement de rotation de l'élément d'entraînement (6), faisant suite au mouvement de montage, dans le premier sens de rotation (d1) sur l'axe de rotation (A),
et dans une troisième étape le mouvement de rotation dans le premier sens de rotation (d1) est transmis à l'écrou fileté (2) par l'élément d'entraînement (6), ce qui déplace l'unité de logement (5) le long de la tige filetée (4) et serre l'article sanitaire contre une butée, telle qu'un mur.

17. Procédé selon la revendication 16, **caractérisé en ce que**, dans la deuxième étape, pendant le mouvement de montage, la came (10) passe dans la portion d'insertion (13) et vient impacter, pendant le mouvement de rotation suivant de l'élément d'entraînement (6) dans le premier sens de rotation (d1), tout d'abord la première portion de butée (14) puis vient se placer dans la portion de logement (15) en raison du mouvement de l'écrou fileté (2) dans le sens de fixation (R).
